# EUROPÄISCHE PATENTSCHRIFT

(11) **EP 0 664 180 B1**
(45) Veröffentlichungstag und Bekanntmachung des Hinweises auf die Patenterteilung: **10.06.1998**
(21) Anmeldenummer: 95100254.2
(22) Anmeldetag: 10.01.1995
(51) Int. Cl.: B23K 1/012, B23K 1/008

(54) **Vorrichtung zur Erzeugung einer Gasströmung in einer Lötanlage**
Device for producing a flow of gas in a soldering apparatus
Dispositif pour produire un courant gazeux dans un appareil de brasage

(30) Priorität: 21.01.1994 DE 4401790
(43) Veröffentlichungstag der Anmeldung: 26.07.1995
(73) Patentinhaber: SMT Maschinengesellschaft mbH, D-97877 Wertheim (DE)
(72) Erfinder: Ulzhöfer, Hans-Günther, D-97877 Wertheim (DE)
(74) Vertreter: Tiedtke, Harro, Dipl.-Ing.

(56) Entgegenhaltungen:
- EP-A- 0 315 228
- EP-A- 0 325 451
- WO-A-91/19587
- DE-U- 9 403 509
- US-A- 3 868 764
- PATENT ABSTRACTS OF JAPAN vol. 013 no. 186 (E-752) ,2.Mai 1989 & JP-A-01 011396 (SANYO ELECTRIC CO LTD) 13.Januar 1989,
- PATENT ABSTRACTS OF JAPAN vol. 016 no. 488 (E-1277) ,9.Oktober 1992 & JP-A-04 179294 (FUJITSU ISOTEC LTD) 25.Juni 1992,

## Beschreibung

Die Erfindung bezieht sich auf eine Vorrichtung zur Erzeugung einer Gasströmung in einer Lötanlage.

Es sind verschiedene maschinelle Lötverfahren bekannt. Die meisten Baugruppen werden jedoch mittels einer Wellenlötanlge oder einer Reflowlötanlage gelötet. Beim Wellenlöten wird im flüssigen Lot mittels einer Pumpe eine sogenannte Lotwelle erzeugt, an der die Baugruppe so vorbeigeführt wird, daß die zu lötenden Stellen von dieser Welle benetzt werden. Auf diese Weise wird das Lot an die gewünschten Stellen gebracht. In einem weiteren Verfahrensschritt wird das Lot zum Erstarren gebracht. Dies wird meistens mittels eines Gebläses beschleunigt, wobei durch die Steuerung der Luft bzw. Gaszufuhr und deren Temperatur der Temperaturgradient beim Erstarren beeinflußt werden kann, wodurch sich die Eigenschaften der Lötstelle beeinflussen lassen.

Beim Reflowlöten wird das Lot in Pastenform auf die Lötstelle aufgebracht und anschließend mittels Wärmezufuhr zum Schmelzen gebracht. Das Erstarren des Lotes wird üblicherweise ebenfalls über eine geregelte Luft- oder Gaszufuhr gesteuert. Die Wärmezufuhr kann in einem sogenannten Reflowofen über Wärmestrahlung oder über Konvektion erfolgen. Die Lotpaste kann jedoch auch mittels eines Lasers zum Schmelzen gebracht werden. Als Strahlungsquellen zum Erhitzen der Lotpaste dienen üblicherweise verschiedenartige Infrarot-Strahlungsquellen. Um eine ausreichende Erhitzung der Lotpaste mittels Konvektion zu erzielen, wird heiße Luft oder Schutzgas, wenn aus Oxidationsgründen unter einer Schutzgasatmosphäre gelötet werden soll, in den Ofen bzw. auf die zu lötende Baugruppe geblasen. Um dabei ausreichend Wärme übertragen zu können, ist es erforderlich, eine relativ starke Luft- bzw. Gasströmung zu verwirklichen. Selbstverständlich gibt es auch Reflowöfen, die mit einer Kombination von Strahlungs- und Konvektionsheizung arbeiten.

Bei den bekannten Düsensystemen zur Erzeugung einer Gasströmung im Bereich der zu lötenden Baugruppe wird das Gas von oben auf die Baugruppe aufgeblasen und zur Seite abgesaugt. Die Baugruppen werden üblicherweise auf einer Transporteinrichtung durch die Lötanlage transportiert, so daß die Absaugung des Gases etwa senkrecht zur Transportrichtung zur Seite hin erfolgt. Das abgesaugte Gas wird entsprechend den Anforderungen behandelt, d.h. gekühlt oder erhitzt, eventuell auch gereinigt und wieder in den Ofen eingeblasen.

Zur Kühlung von zu lötenden Baugruppen werden Düsensysteme verwendet, die grundsätzlich genauso aufgebaut sind. Sollen Lötstellen schnell abgekühlt werden, werden dabei an die Düsensysteme dieselben Anforderungen gestellt, da auch in diesem Fall eine möglichst schnelle Wärmeübertragung erwünscht ist.

Bei der bekannten Verfahrensweise wird dabei versucht, die Wärmeübertragung durch eine Erhöhung der Strömungsgeschwindigkeit und damit des Massenstromes zu verbessern. Dabei bestehen jedoch gewisse Grenzen. Abhängig von der zu lötenden Baugruppe, insbesondere den verwendeten Bauteilen und der Größe bzw. der Geometrie der Lötstelle, kommt es ab einer bestimmten Strömungsgeschwindigkeit durch den Strömungswiderstand der Bauteile zu einer Versetzung der Bauteile oder sogar zu einem Wegblasen der Bauteile. Besonders betroffen hiervon sind selbstverständlich oberflächenmontierte Bauteile, sogenannte SMDs. Dieses Problem besteht in erster Linie bei Reflowlötanlagen mit Konvektionsheizung, da die Lotpaste in der sogenannten Peakzone schnell erwärmt werden muß und in dieser Phase voll aufgeschmolzen wird, so daß besonders die SMD-Bauteile gewissermaßen auf dem flüssigen Lot schwimmen und in diesem Zustand leicht versetzt werden können . Dieses Problem kann jedoch auch in der Abkühlzone, auch bei Wellenlötanlagen, auftreten, solange das Lot nicht ausreichend verfestigt ist, die Bauteile sicher zu halten.

Aus der EP 0 325 451 A1 ist eine Lötanlage bekannt, die über Ventilatoren verfügt, um eine Gasströmung vorzusehen, die auf das Lötgut gerichtet wird. Diese Ventilatoren sind in Gehäusen vorgesehen und verfügen über zentral angeordnete Düsen, über die das Gas auf die zu lötende Baugruppe aufgeblasen wird. Die Absaugung des über mehrere nebeneinander angeordnete Düsen aufgeblasenen Gases erfolgt über relativ große Kanäle, die im Randbereich des Gehäuses vorgesehen sind. Das Gas kann desweiteren durch Schlitze zwischen den genannten Gehäusen wieder abströmen. Die Einströmdüsen sind bei dieser Vorrichtung im mittleren Bereich jedes Gehäuses vorgesehen, wobei im Randbereich desselben Gehäuses Absaugöffnungen angeordnet sind, um das eingeblasene Gas zumindest zum Teil wieder innerhalb des Gehäuses zurückzufördern.

Die WO 91/19587 beschreibt eine Lötanlage, die ebenfalls mit einer Vielzahl von Gehäusen versehen sind, in deren mittleren Bereich Einströmdüsen ausgebildet sind, über die ein einzublasendes Gas auf das Lötgut aufgebracht wird. Die Absaugung des eingeblasenen Gases erfolgt über Absaugöffnungen, die jeweils durch die äußere Mantelfläche des Gehäuses und eine Trennwand zwischen den Gehäusen ausgebildet werden. Auf diese Weise werden zwischen zwei Gehäusen zwei Absaugöffnungen realisiert. Jedes Gehäuse verfügt über ein eigenes Gebläse, mittels dem zu einen das Gas durch die Einströmdüsen auf das Lötgut aufgebracht wird und zum anderen das durch die zugeordneten Absaugöffnungen zurückströmende Gas wieder abgesaugt wird. D.h., bei dieser Vorrichtung ist jedes Gehäuse für sich autark ausgebildet und mit einem eigenen Gebläse ausgestattet. Gemäß einer alternativen Ausführungsform kann die erwünschte Gasströmung mittels Gehäusen erzeugt werden, bei denen im Randbereich Einströmdüsen vorgesehen sind und die Absaugung des Gases über einen mittleren Bereich des Gehäuses erfolgt.

Dem Anmeldungsgegenstand liegt die Aufgabe zugrunde, eine Vorrichtung zur Erzeugung einer Gasströmung zum Erhitzen eines Lötgutes zu schaffen, die vielseitig einsetzbar ist.

Diese Aufgabe wird durch die Merkmale des Patentanspruchs 1 gelöst. Mit der anmeldungsgemäßen Vorrichtung wird eine Vorrichtung geschaffen, die modular aufgebaut ist und daher universell einsetzbar ist. Der modulare Aufbau erlaubt es, je nach Anforderung an die Lötanlage mehrere Module zum Erhitzen des Lötgutes vorzusehen. Auf diese Weise kann äußerst wirtschaftlich eine Mehrzonenanlage geschaffen werden, in der das Lötgut stufenweise auf die gewünschte Temperatur erhitzt wird. Der gerätetechnische Aufwand ist dabei relativ gering, da lediglich ein Gebläse sowohl zum Ein- als auch zum Ausströmen des Gases durch die verschiedenen Düsen vorgesehen ist, da sowohl die Einströmdüse als auch die Absaugöffnung durch Gehäuse gebildet wird, die identisch sein können, so daß sich auch die Größe der Module mit geringem Aufwand modifizieren läßt.

Um ein flächendeckendes System von Wirbeln zu erzeugen, sind eine Vielzahl von Einströmdüsen und Absaugöffnungen vorgesehen, die vorteilhafter Weise in Reihen angeordnet sind, wobei eine bestimmte Anzahl zu einem Modul zusammengefaßt wird, so daß das gesamte System modulartig aufgebaut wird und so für verschiedenste Anlagen durch Zusammenstellung der entsprechenden Module verwendbar ist.

Die Einströmdüsen und Absaugöffnungen können so beschaffen sein, daß eine Vielzahl identischer und gleichgerichteter Wirbel entsteht. Es ist jedoch auch möglich, entgegengesetzte Wirbel auszubilden, was den Vorteil hat, das zumindest an größeren Bauteilen Kräfte entgegengesetzter Richtung angreifen, wodurch die Gefahr der Bauteilversetzung weiter verringert wird. Dies wird anhand des Ausführungsbeispiels noch genauer erläutert.

Bei den meisten Anwendungen ist es vorteilhaft, das Gas von oben auf das Lötgut einzublasen und es auch wieder nach oben abzusaugen, da dadurch Wirbel entstehen, deren Hauptströmungskomponente sich senkrecht zum Lötgut befindet und nur eine geringe Komponente in der Lötgutebene vorhanden ist, so daß die Gefahr von Bauteilversetzungen weiter vermindert ist.

Das Einblasen und Absaugen des Gases kann über getrennte Gebläse oder über ein gemeinsames Gebläse erfolgen. Dabei können in dem Strömungsweg des Gases Einrichtungen zur Aufbereitung des Gases, wie Wärmetauscher oder Reinigungseinrichtungen vorgesehen sein. Selbstverständliche kann auch frisches Gas zugeführt und verbrauchtes Gas abgeführt werden.

Die erfindungsgemäße Vorrichtung hat sich besonders beim Einsatz in Reflowöfen zum Aufschmelzen der Lotpaste mittels eines heißen Gases bewährt. Die Vorrichtung kann jedoch auch in Abkühlzonen von Lötanlagen vorteilhaft eingesetzt werden, bei denen ein hoher Temperaturgradient verwirklicht werden soll.

Bei dem folgend dargestellten Ausführungsbeispiel werden alle Einströmdüsen gleichermaßen mit Gas beaufschlagt und die Absaugöffnungen an den gleichen Unterdruck zum Absaugen des Gases angelegt. Es ist jedoch zur besseren Steuerung des Löt- bzw. Abkühlprozesses auch möglich, die Einströmung der Düsen bzw. den absaugenden Unterdruck zu variieren, um so ein bestimmtes ungleichförmiges Strömungsprofil in der Lötanlage aufzubauen, das einen differenzierten Wärmeübergang ermöglicht.

Folgend wird die Erfindung anhand eines bevorzugten Ausführungsbeispiels näher erläutert.

Figur 1 zeigt eine dreidimensionale Prinzipskizze zur Erläuterung des erfindungsgemäßen Verfahrens.

Figur 2 zeigt ein Modul der Vorrichtung zur Durchführung des erfindungsgemäßen Verfahrens im Querschnitt.

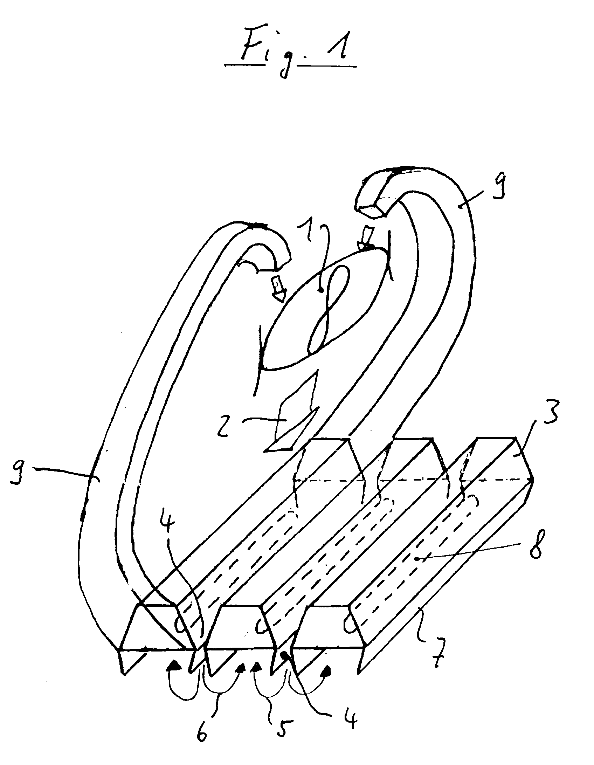

Wie aus Figur 1 zu sehen ist, wird mittels eines Gebläses 1 Gas in Richtung des Pfeiles 2 gefördert. Dieses Gas trifft auf die kassettenartigen Gehäuse 3 der Absaugeinrichtung. Die Gehäuse 3 sind in einem bestimmten Abstand zueinander angeordnet, so daß zwischen diesen ein Schlitz 4 besteht. Durch diesen Schlitz 4 tritt das Gas in der Zeichnung nach unten in Richtung der Pfeile 5 und 6 aus. Weitere Austrittsmöglichkeiten sind nicht gegeben; Seitenwände etc. sind in Figur 1 nicht dargestellt. Die Gehäuse 3 sind so gestaltet, daß das austretende Gas in zwei entgegengesetzten Gaswirbeln austritt. Die Gestalt und Richtung der Gaswirbel wird dabei maßgeblich auch durch Strömungleitblenden 7 auf der Unterseite der Gehäuse 3 bestimmt.

Das ausgetretene Gas wird über die Absaugschlitze 8, die in einer, in Figur 1 nicht sichtbaren, Zwischenwand des Gehäuses 3 zwischen den Strömungsleitblenden 7 vorgesehen sind, wieder eingesaugt. Das eingesaugte Gas wird über Absaugleitungen 9 wieder zum Gebläse 1 gefördert.

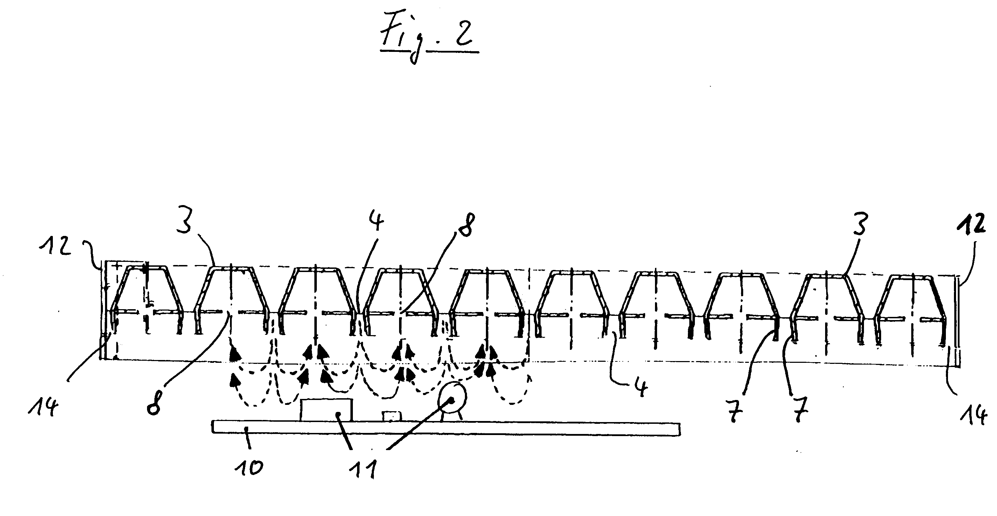

Aus Figur 2 ist gut der Aufbau eines Moduls der Vorrichtung und das Zusammenwirken mit dem Lötgut zu erkennen. In dem dargestellten Modul sind zehn Gehäuse 3 mit entsprechend zehn Absaugschlitzen 8 angeordnet. Das Einströmen des Gases erfolgt über die Schlitze 4 zwischen den Gehäusen 3 und den zwei Schlitzen 14 im Außenbereich des Moduls zwischen den äußersten Gehäusen 3 und den Seitenwänden 12 des Moduls, so daß elf Einströmschlitze vorhanden sind.

Im oberen nicht dargestellten Bereich des Moduls werden die in Figur 1 dargestellten Absaugleitungen 9 der Gehäuse 3 zusammengefaßt und mittels einer gemeinsamen Leitung mit dem Gebläse 1 verbunden, das das Gas über einen ebenfalls nicht dargestellten Verteiler gleichmäßig auf der Oberseite des Moduls zuführt, so daß die Einströmschlitze gleichmäßig mit Gas beaufschlagt werden.

Das Modul ist oberhalb der zu lötenden Baugruppe 10 angeordnet, die langsam unter dem Modul in der Zeichnung von links nach rechts vorbeitransportiert wird. Wie gut aus der Darstellung der Gaswirbel zu sehen, ist deren Hauptströmungsrichtung senkrecht zur Ebene der Baugruppe 10 orientiert. Größere Bauteile, die aufgrund ihrer großen Wiederstandsfläche besonders versetzungsgefährdet sind, befinden sich bei der dargestellten Ausführungsform meistens im Einflußbereich zweier entgegengesetzt orientierter Gaswirbel, wie gut bei den Bauteilen 11 zu sehen. Dadurch werden die in der Ebene der Baugruppe 10 wirkenden Strömungskomponenten der Gaswirbel zumindest weitgehend gegeneinander aufgehoben, so daß die Gefahr der Bauteilversetzung auch bei relativ hohen Strömungsgeschwindigkeiten gering ist. Durch die entgegengesetzte Ausrichtung der Gaswirbel entsteht zusätzliche Reibung zwischen diesen, wodurch die Turbulenz der Strömung erhöht und damit der Wärmeübergang weiter verbessert wird.

Bei der gezeigten Ausführungsform haben die walzenartigen Gaswirbel keine Strömungskomponenten senkrecht zur Transportrichtung der Baugruppe 10. Die Module können jedoch auch so beschaffen sein, daß Gaswirbel in unterschiedlichste Richtungen entstehen, wodurch die Turbulenz der Strömung weiter erhöht wird. Die gezeigten Module können auch verdreht zur Transportrichtung eingebaut werden, so daß beispielsweise bei einer Verdrehung um 90° keine Strömungskomponenten in Transportrichtung vorliegen.

Die zweckmäßige Anordnung der Module und Ausrichtung der Einströmdüsen und Absaugöffnungen muß in Abhängigkeit von den zu lötenden Baugruppen bzw. der zu kühlenden Baugruppen bei Einsatz in einer Abkühlzone und der jeweiligen Lötanlage bestimmt werden.

## Patentansprüche

1. Vorrichtung zur Erzeugung einer Gasströmung in einer Lötanlage, bei der mittels eines Gebläses durch Einströmdüsen auf ein Lötgut aufgeblasen und über eine Absaugeinrichtung wieder abgesaugt wird, wobei
zumindest ein Modul mit einer Vielzahl von im Abstand zueinander stehenden Gehäusen (3) der Absaugeinrichtung vorgesehen ist und die Einströmdüsen (4) anschließend durch den Zwischenraum zwischen zwei benachbarten Gehäusen (3) gebildet werden, wobei die Unterseite jedes Gehäuses (3) als eine Absaugöffnung (8) für das Gas ausgebildet ist, und
jedes Modul ein einziges Gebläse (1) hat, über das Gas sowohl den Einströmdüsen (4) des Moduls zuführbar als auch durch die Absaugöffnung (8) abführbar ist.

2. Vorrichtung nach Anspruch 1, **dadurch gekennzeichnet,** daß die Einströmdüsen (4, 14) und Absaugöffnungen (8) so ausgebildet sind, daß identische gleichgerichtete Gaswirbel entstehen.

3. Vorrichtung nach Anspruch 1, **dadurch gekennzeichnet,** daß durch die Einströmdüsen (4, 14) das eingeströmte Gas in mindestens zwei getrennte Gasströmungen aufgeteilt wird, die über unterschiedliche Absaugöffnungen (8) abgesaugt werden.

4. Vorrichtung nach Anspruch 3, **dadurch gekennzeichnet,** daß die Einströmdüsen (4, 14) und Absaugöffnungen (8) so angeordnet sind, daß sich entgegengesetzte Gaswirbel ausbilden.

5. Vorrichtung nach einem der Ansprüche 1 bis 4, **dadurch gekennzeichnet,** daß die Einströmdüsen (4, 14) und Absaugöffnungen (8) oberhalb des Lötgutes (10) angeordnet sind.

6. Vorrichtung nach einem der Ansprüche 1 bis 5, **dadurch gekennzeichnet,** daß die Einströmdüsen (4, 14) mittels einer Sammelleitung verbunden sind.

7. Vorrichtung nach einem der Ansprüche 1 bis 6, **dadurch gekennzeichnet,** daß die Absaugöffnungen (8) mittels einer Sammelleitung verbunden sind.

8. Vorrichtung nach einem der Ansprüche 6 oder 7, **dadurch gekennzeichnet,** daß mehrere Einströmdüsen (4, 14) und/oder Absaugöffnungen (8) mit zugehörigen Sammelleitungen zu einer Einheit verbunden sind.

9. Vorrichtung nach Anspruch 8, **dadurch gekennzeichnet,** daß mehrere Einheiten hintereinander angeordnet sind.

10. Vorrichtung nach Anspruch 9, **dadurch gekennzeichnet,** daß die Einheiten mittels Verbindungsleitungen verbunden sind.

11. Vorrichtung nach einem der Ansprüche 1 bis 10, **dadurch gekennzeichnet,** daß mehrere Einströmdüsen (4, 14) mit einem Gebläse (1) verbunden sind.

12. Vorrichtung nach einem der Ansprüche 1 bis 11, **dadurch gekennzeichnet,** daß mehrere Absaugöffnungen (8) mit einem Gebläse (1) verbunden sind.

13. Vorrichtung nach Anspruch 11 oder 12, **dadurch gekennzeichnet,** daß die Einströmdüsen (4, 14) und Absaugöffnungen (8) mit einem gemeinsamen Gebläse (1) verbunden sind.

14. Vorrichtung nach einem der Ansprüche 1 bis 13, **dadurch gekennzeichnet,** daß die Einströmdüsen (4, 14) und/oder Absaugöffnungen (8) mit einer Einrichtung zur Aufbereitung des Gases verbunden sind.

15. Vorrichtung nach einem der Ansprüche 1 bis 14, **dadurch gekennzeichnet,** daß die Einströmdüsen (4, 14) und/oder Absaugöffnungen (8) einen schlitzförmigen, runden oder kreissegmentartigen Querschnitt haben.

16. Vorrichtung nach einem der Ansprüche 1 bis 15, **dadurch gekennzeichnet,** daß die Einströmdüsen (4, 14) und/oder Absaugöffnungen (8) in Reihe angeordnet sind.

17. Verwendung einer Vorrichtung nach einem der Ansprüche 1 bis 16, **dadurch gekennzeichnet,** daß diese zur Erwärmung der Lotpaste in einem Reflowofen verwendet wird.

18. Verwendung einer Vorrichtung nach einem der Ansprüche 1 bis 16, **dadurch gekennzeichnet,** daß diese zur Abkühlung des Lötgutes (10) bzw. des Lotes in einer Reflowlötanlage oder einer Wellenlötanlage verwendet wird.

## Claims

1. Device for generating a gas flow in a soldering unit in which it is blown by means of a blower through inlet nozzles onto soldering material and vacuumed off via a vacuum device, and
at least one module with a plurality of spaced housings (3) of the vacuum device is provided, and the inlet nozzles (4) are adjacent thereto formed by the intermediate space between two adjacent housings (3), and the bottom of each housing (3) is designed as a vacuum opening (8) for the gas, and
each module comprises a single blower (1) through which gas is both deliverable to the inlet nozzles (4) of the module and removable via the outlet opening (8).

2. Device according to Claim 1, **characterised in that** the intake nozzles (4, 14) and the vacuum openings (8) are designed so that identical equidirectional gas swirls develop.

3. Device according to Claim 1**, characterised in that** flowed in gas is divided by the inlet nozzles (4, 14) into at least two separate gas flows which are vacuumed off via different vacuum openings (8).

4. Device according to Claim 3, **characterised in that** the inlet nozzles (4, 14) and vacuum openings (8) are arranged in such a manner that opposing gas swirls develop.

5. Device according to one of Claims 1 to 4, **characterised in that** the inlet nozzles (4, 14) and vacuum openings (8) are arranged above the soldering material (10).

6. Device according to one of Claims 1 to 5, **characterised in that** the inlet nozzles (4, 14) are connected by means of a collecting pipe.

7. Device according to one of Claims 1 to 6, **characterised in that** the vacuum openings (8) are connected by means of a collecting pipe.

8. Device according to one of Claims 6 or 7, **characterised in that** a plurality of inlet nozzles (4, 14) and/or vacuum openings (8) are joined with associated collecting pipes into one unit.

9. Device according to Claim 8, **characterised in that** a plurality of units are arranged one behind the other.

10. Device according to Claim 9, **characterised in that** the units are connected by means of connecting pipes.

11. Device according to one of Claims 1 to 10, **characterised in that** a plurality of inlet nozzles (4, 14) is connected to a blower (1).

12. Device according to one of Claims 1 to 11, **characterised in that** a plurality of vacuum openings (8) is connected to a blower (1).

13. Device according to Claim 11 or 12, **characterised in that** the inlet nozzles (4, 14) and vacuum openings (8) are connected to a common blower (1).

14. Device according to one of Claims 1 to 13, **characterised in that** the inlet nozzles (4, 14) and/or vacuum opening (8) are connected to a device for processing the gas.

15. Device according to one of Claims 1 to 14, **characterised in that** the inlet nozzles (4, 14) and/or vacuum openings (8) have a slotted, round a segmented circular cross-section.

16. Device according to one of Claims 1 to 15, **characterised in that** the inlet nozzles (4, 14) and/or vacuum openings (8) are arranged in series.

17. Use of a device according to Claims 1 to 16, **characterised in that** they are used for heating the solder paste in a reflow furnace.

18. Use of a device according to one of Claims 1 to 16, **characterised in that** it is used for cooling the soldering material (10) or the solder in a reflow soldering unit or a wave soldering unit.

## Revendications

1. Dispositif de génération d'un écoulement de gaz dans une installation de soudage, dans lequel, au moyen d'une soufflante, on souffle à travers des buses d'injection sur un produit de soudage et on réaspire par l'intermédiaire d'un dispositif d'aspiration, où
au moins un module comportant une pluralité de carters (3), placées à distance les unes des autres, et appartenant au dispositif d'aspiration, est prévu et les buses d'injection (4) étant ensuite constituées par l'espace intermédiaire constitué entre deux carters (3) voisins, la face inférieure de chaque carter (3) étant réalisée sous forme d'ouverture d'aspiration (4) pour le gaz, et
chaque module ayant une soufflante (1) unique, par l'intermédiaire de laquelle du gaz peut être tant amené aux buses d'injection (4) du module qu'également évacuées au moyen du dispositif d'aspiration (8).

2. Dispositif selon la revendication 1, caractérisé en ce que les buses d'injection (4, 14) et les ouvertures d'aspiration (8) sont constituées de manière à ce que des tourbillons de gaz identiques et orientés dans le même sens soient générés.

3. Dispositif selon la revendication 1, caractérisé en ce que, au moyen des buses d'injection (4, 14), le gaz injecté est subdivisé en au moins deux écoulements de gaz séparés, qui sont aspirés par l'intermédiaire d'ouvertures d'aspiration (8) différentes.

4. Dispositif selon la revendication 3, caractérisé en ce que les buses d'injection (4, 14) et les ouvertures d'aspiration (8) sont disposées de manière à ce que soient constitués des tourbillons de gaz opposés.

5. Dispositif selon l'une des revendications 1 à 4, caractérisé en ce que les buses d'injection (4, 14) et les ouvertures d'aspiration (8) sont disposées au-dessus du produit de soudage (10).

6. Dispositif selon l'une des revendications 1 à 5, caractérisé en ce que les buses d'injection (4, 14) sont reliées au moyen d'une conduite collectrice.

7. Dispositif selon l'une des revendications 1 à 6, caractérisé en ce que les ouvertures d'aspiration (8) sont reliées au moyen d'une conduite collectrice.

8. Dispositif selon l'une des revendications 6 ou 7, caractérisé en ce que plusieurs buses d'injection (4, 14) et/ou ouvertures d'aspiration (8) sont reliées à des conduites collectrices afférentes pour constituer un ensemble.

9. Dispositif selon la revendication 8, caractérisé en ce que plusieurs unités sont disposées les unes derrière les autres.

10. Dispositif selon la revendication 9, caractérisé en ce que les unités sont reliées au moyen de conduites de liaison.

11. Dispositif selon l'une des revendications 1 à 10, caractérisé en ce que plusieurs buses d'injection (4, 14) sont reliées à une soufflante (1).

12. Dispositif selon l'une des revendications 1 à 11, caractérisé en ce que plusieurs ouvertures d'aspiration (8) sont reliées à une soufflante (1).

13. Dispositif selon la revendication 11 ou 12, caractérisé en ce que les buses d'injection (4, 14) et les ouvertures d'aspiration (8) sont reliées à une soufflante (1) commune.

14. Dispositif selon l'une des revendications 1 à 13, caractérisé en ce que les buses d'injection (4, 14) et/ou les ouvertures d'aspiration (8) sont reliées à un dispositif de préparation du gaz.

15. Dispositif selon l'une des revendications 1 à 14, caractérisé en ce que les buses d'injection (4,14) et/ou les ouvertures d'aspiration (8) ont une section transversale en forme de fente, ronde ou du genre de segment de cercle.

16. Dispositif selon l'une des revendications 1 à 15, caractérisé en ce que les buses d'injection (4, 14) et/ou les ouvertures d'aspiration (8) sont disposées en rangées.

17. Utilisation d'un dispositif selon l'une des revendications 1 à 16, caractérisé en ce que celui-ci est utilisé pour chauffer la pâte de produit de soudage dans un four à fusion.

18. Utilisation d'un dispositif selon l'une des revendications 1 à 16, caractérisé en ce que celui-ci est utilisé pour refroidir le produit de soudage (10) ou la soudure, dans une installation de soudage à fusion ou dans une installation de soudure à la vague.
